# EUROPEAN PATENT APPLICATION

(11) **EP 2 730 846 A2**
(43) Date of publication of application: **14.05.2014**
(21) Application number: 13191948.2
(22) Date of filing: 07.11.2013
(51) Int. Cl.: F23R 3/28, F23R 3/34

(54) **Fuel injector**

(30) Priority: 08.11.2012 US 201213672147
(71) Applicant: General Electric Company, Schenectady, New York 12345 (US)
(72) Inventor: Stoia, Lucas John, Greenville, SC South Carolina 29615 (US); Boardman, Gregory Allen, West Chester, OH Ohio 45069-4846 (US); Chen, Wei, Greenville, SC South Carolina 29615-4614 (US)
(74) Representative: Cleary, Fidelma

(57) **Abstract**

A fuel injector is provided and includes a surface (31) disposed proximate to a flow (32) of a first fluid and a delta wing feature (33). The surface (31) has upstream and downstream portions defined relative to the flow (32) and defines an injector hole (36) in the downstream portion by which a jet (37) of a second fluid is injectable into the flow (32). The delta wing feature (33) is disposed on the surface (31) at the upstream portion and is configured to lift an oncoming portion (40) of the flow (32) off the surface (31) and to cause the oncoming portion (40) of the flow (32) to form a pair of counter-rotating vortices (43) that respectively co-rotate with the jet (37) in a crossflow direction.

## Description

### BACKGROUND OF THE INVENTION

The subject matter disclosed herein relates to enhancements to fuel injectors and, more particularly, to a delta wing enhancement for fuel injectors.

A typical gas turbine engine includes a compressor that compresses inlet air, a combustor in which the compressed inlet air and fuel are combusted to produce a main flow of products of the combustion, a turbine and a transition piece. The turbine is receptive of the main flow and configured to expand the main flow in power generation operations. The transition piece is fluidly interposed between the combustor and the turbine. Combustible materials, such as the compressed inlet air and fuel are injectable into a head end of the combustor. In the case of axially staged injection or late lean injection (LLI), additional combustible materials are injectable into downstream sections of the combustor and the transition piece.

Whether the combustible materials are injected into the head end of the combustor, the downstream sections of the combustor or the transition piece, a performance of the gas turbine engine is largely dependent upon the ability of the combustible materials to be mixed prior to combustion. That is, as a degree of mixing of the combustible materials increases, increasingly completed combustion operations can be achieved. This in turn leads to a greater power output from the turbine and a decrease in the amount of pollutant emissions produced by the gas turbine engine.

### BRIEF DESCRIPTION OF THE INVENTION

According to one aspect of the invention, a fuel injector is provided and includes a surface disposed proximate to a flow of a first fluid and a delta wing feature. The surface has upstream and downstream portions defined relative to the flow and defines an injector hole in the downstream portion by which a jet of a second fluid is injectable into the flow. The delta wing feature is disposed on the surface at the upstream portion and is configured to lift an oncoming portion of the flow off the surface and to cause the oncoming portion of the flow to form a pair of counter-rotating vortices that respectively co-rotate with the jet in a cross-flow direction.

According to another aspect of the invention, a fuel injector is provided and includes a surface formed as a tubular element and disposed proximate to a flow of a first fluid, the surface having upstream and downstream portions defined relative to the flow and defining injector holes in the downstream portion by which jets of a second fluid are injectable into the flow and delta wing features. The delta wing features are disposed on the surface at the upstream portion and each one of the delta wing features is associated with a corresponding one of the injector holes and is configured to lift an oncoming portion of the flow off the surface and to cause the oncoming portion of the flow to form a pair of counter-rotating vortices that respectively co-rotate with the corresponding one of the jets in a cross-flow direction.

According to yet another aspect of the invention, a fuel injector is provided and includes a surface formed as a toroidal element and disposed proximate to a flow of a first fluid, the surface having upstream and downstream portions defined relative to the flow and defining injector holes in the downstream portion by which jets of a second fluid are injectable into the flow and delta wing features. The delta wing features are disposed on the surface at the upstream portion and each one of the delta wing features is associated with a corresponding one of the injector holes and is configured to lift an oncoming portion of the flow off the surface and to cause the oncoming portion of the flow to form a pair of counter-rotating vortices that respectively co-rotate with the corresponding one of the jets in a cross-flow direction.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic illustration of a turbomachine;
FIG. 2 is an enlarged schematic illustration of a combustor and a transition piece of a turbomachine;
FIG. 3 is an enlarged schematic illustration of a combustor head end of a turbomachine in accordance with embodiments;
FIG. 4 is an enlarged schematic illustration of a combustor head end of a turbomachine in accordance with alternative embodiments;
FIG. 5 is an enlarged schematic illustration of fuel nozzle of a turbomachine in accordance with embodiments;
FIG. 6 is an enlarged schematic illustration of fuel nozzle of a turbomachine in accordance with alternative embodiments;
FIG. 7 is a cutaway perspective view of a fuel injector having delta wing features;
FIG. 8 is a perspective view of a single delta wing feature;
FIG. 9 is a side view of a single delta wing feature;
FIG. 10 is a partial perspective view of a toroidal fuel injector in accordance with embodiments; and
FIG. 11 is a partial perspective view of a longitudinal fuel injector in accordance with embodiments.

The detailed description explains embodiments of the invention, together with advantages and features, by way of example with reference to the drawings.

### DETAILED DESCRIPTION OF THE INVENTION

The description provided below relates to a delta wing feature added upstream from a jet in cross flow, which is formed by a fuel delivery hole on an outer style late lean injection (LLI) injector. The delta wing is positioned to point downstream toward the fuel hole and has an increasing thickness toward its downstream end. The delta wing thus provides a ramp for the oncoming air flow to be lifted off the injector wall. Additionally, the shape of the wing sets up a counter-rotating vortex pair that co-rotates with the fuel jet in a cross-flow direction. This enhances vorticity, which is a primary fuel/air mixing mechanism, and fuel jet penetration, which is a key factor in mixing and avoiding flame holding concerns. Finally, the geometry of the delta wing is such that very small wakes exist behind the wing that could present a flame holding risk.

The delta wing feature is applicable in the LLI injector, as noted above, and in additional applications as well. Such additional applications include quaternary fuel injection and fuel nozzle fuel injection. In each case, the delta wing feature may be incorporated into peg-shaped or annular fuel injectors.

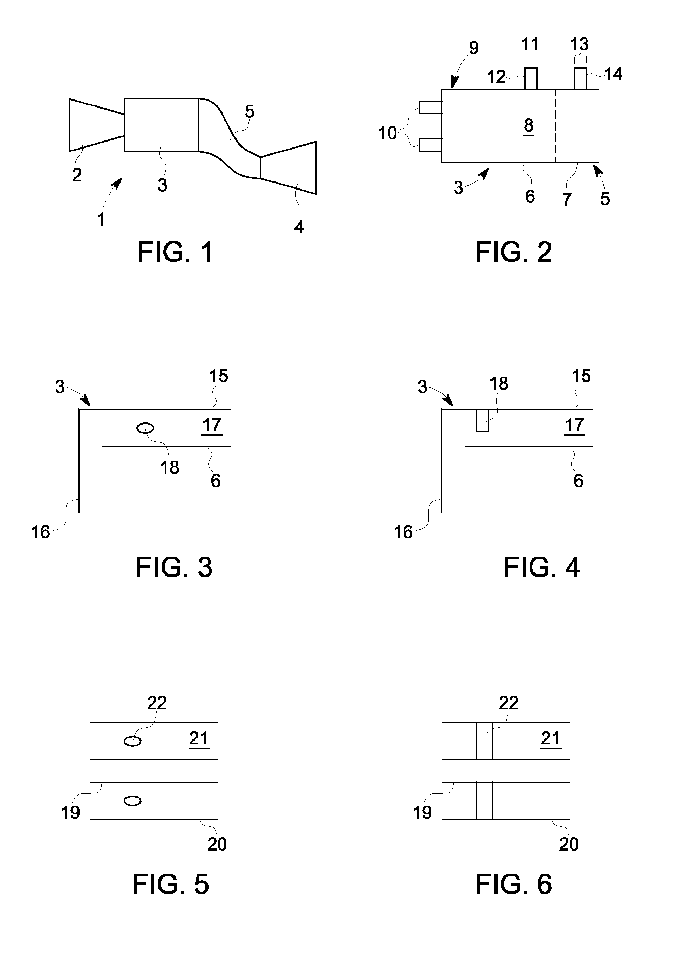

With reference to FIGS. 1 and 2, a gas turbine engine 1 includes a compressor 2 that compresses inlet air, a combustor 3 in which the compressed inlet air and fuel are provided as combustible materials and combusted to produce a main flow of products of the combustion, a turbine 4 and a transition piece 5. The turbine 4 is receptive of the main flow and configured to expand the main flow in power generation operations. The transition piece 5 is fluidly interposed between the combustor 3 and the turbine 4. The combustor 3 includes an annular combustor liner 6 and the transition piece 5 includes an annular transition piece liner 7. The combustor liner 6 and the transition piece liner 7 are cooperatively formed to define an interior 8 through which the main flow proceeds from the combustor 3 to the turbine 4.

Combustible materials, such as the compressed inlet air and fuel are injectable into the interior 8 at the head end 9 of the combustor 3 via fuel nozzles 10. In the case of axially staged injection or late lean injection (LLI), additional combustible materials are injectable into the interior 8 at downstream sections 11 of the combustor 3 via first stage fuel injectors 12 and at upstream sections 13 of the transition piece 5 via second stage fuel injectors 14.

With reference to FIGS. 3 and 4, the combustor liner 6 is surrounded by an annular flow sleeve 15 that is coupled to an end plate 16. The combustor liner 6 and the flow sleeve 15 cooperatively define an annulus 17 through which the compressed air output from the compressor 2 flows toward the head end 9 before turning radially inwardly and then flowing in the opposite direction toward the fuel nozzles 10. In some embodiments and, as shown in FIGS. 3 and 4, a quat fuel injector 18 may be disposed within the annulus 17 such that quaternary fuel can be injected into the flow of the compressed air. The quat fuel injector 18 may be annular or toroidal (see FIG. 3) or tubular or peg-shaped (see FIG. 4). In the former case, quaternary fuel injection is generally directed radially out of the quat fuel injector 18 whereas in the latter case, the quaternary fuel injection is generally directed circumferentially out of the quat fuel injector 18.

With reference to FIGS. 5 and 6, each of the fuel nozzles 10 includes a center body 19 and a peripheral wall 20. The center body 19 has a longitudinal axis that is oriented to extend along the axial dimension of the combustor 3. The peripheral wall 20 surrounds the center body 19 along the longitudinal axis to define an annular pre-mixing pathway 21 along which compressed air flows toward a combustion zone defined in the interior 8 of the combustor 3. As shown in FIGS. 5 and 6, a fuel nozzle injector 22 may be disposed within the annular pre-mixing pathway 21 such that fuel can be injected into the flow of the compressed air. The fuel nozzle injector 22 may be annular or toroidal (see FIG. 5) or tubular or peg-shaped (see FIG. 6). In the former case, the fuel injection is generally directed radially out of the fuel nozzle injector 22 whereas in the latter case, the fuel injection is generally directed circumferentially out of the fuel nozzle injector 22.

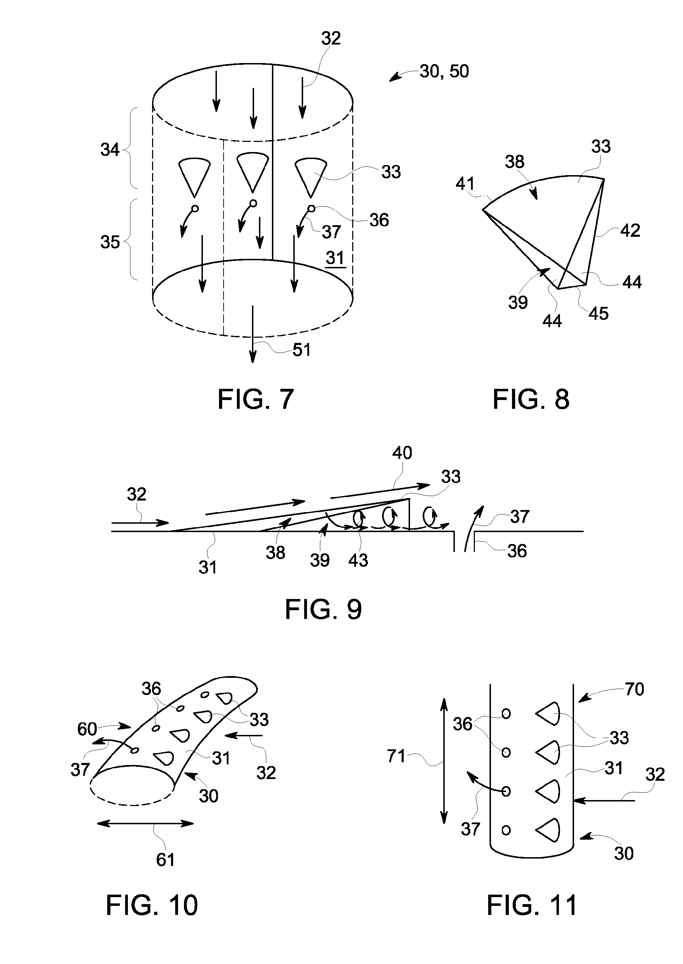

With reference to FIGS. 7-9, a fuel injector 30 is provided and may be employed as one or more of the first or second stage fuel injectors 12 and 14 (see FIG. 2). The fuel injector 30 includes a surface 31 disposed proximate to a flow 32 of a first fluid and a delta wing feature 33. The surface 31 has an upstream portion 34 and a downstream portion 35, which are defined relative to a predominant direction of the flow 32. The surface 31 is further formed to define an injector hole 36 in the downstream portion 35. A second fluid is injectable into the flow 32 via the injector hole 36 whereby the injector hole 36 generates a jet 37 of the second fluid.

The delta wing feature 33 is disposed on the surface 31 at the upstream portion 34 such that an alignment of the injector hole 36 and the delta wing feature 33 is provided substantially in parallel with a predominant direction of the flow 32. The delta wing feature 33 includes a ramp portion 38 and a wing portion 39. The ramp portion 38 is configured to lift an oncoming portion 40 of the flow 32 off the surface 31 and has a curved leading edge 41 and a substantially flat, ramped surface 42. The wing portion 39 is configured to cause the portion 40 of the flow 32 to form a pair of counter-rotating vortices 43 that respectively co-rotate with the jet 37 in a cross-flow direction. The wing portion 39 includes converging lateral surfaces 44 that form a substantially linear trailing edge 45. The curved leading edge 41 and the substantially linear trailing edge 45 may be transversely oriented with respect to one another.

In accordance with embodiments, it will be understood that delta wing feature 33, the injector hole 36, and the jet 37 may each be plural in number. In such cases, as shown in FIG. 7, each one of the jets 37 is generated by a corresponding one of the injector holes 36 and each one of the delta wing features 33 is associated with a corresponding one of the injector holes 36.

In accordance with embodiments and, with reference to FIGS. 2 and 7-9, the fuel injector 30 may be provided for use as one or more of the first stage fuel injectors 12 or the second stage fuel injectors 14 for axially staged injection or LLI. In such cases, the flow 32 is provided as a mixture (e.g., a micro-mixture) of low or high heating value fuel and compressed air that is drawn from a compressor discharge casing (CDC) disposed around the downstream sections 11 of the combustor 3 and the upstream sections 13 of the transition piece 5. The flow 32 is thus directed radially inwardly toward the main flow proceeding from the combustor 3, through a transition zone defined in the transition piece 5 and toward the turbine 4.

In order to contain the flow 32, the surface 31 forms a tubular element 50 that has a longitudinal axis 51. The surface 31 faces inwardly with the injection holes 36 and the delta wing features 33 correspondingly arranged annularly whereby the jets 37 are aimed toward a common central target. Further, in order to direct the flow 32 radially into the main flow, the tubular element 50 may be disposed with the longitudinal axis 51 arranged along a radial orientation relative to the main flow (see FIG. 2).

In accordance with further alternative embodiments and, with reference to FIGS. 3, 5, 7 and 10, the fuel injector 30 may be provided as the quat fuel injector 18 (see FIG. 3) or the fuel nozzle injector 22 (see FIG. 5). In the former case, the flow 32 is provided as the flow of compressed air proceeding through the annulus 17 toward the head end 9 of the combustor 3. In the latter case, the flow 32 is provided as the flow of compressed air proceeding through the annular pathway 21 toward the combustion zone defined in the interior 8 of the combustor 3. In either case, the surface 31 forms a toroidal element 60 having a poloidal axis 61 and has inward and outward sides that face radially inwardly and radially outwardly, respectively, relative to an axial dimension of the combustor 3. The toroidal element 60 is disposable in the annulus 17 or the annular pre-mixing pathway 21 with the poloidal axis 61 arranged substantially in parallel with the axial dimension of the combustor 3. Thus, the injection holes 36 and the delta wing features 33 may be correspondingly arranged along the annular length of the surface 31 to face radially inwardly or outwardly whereby the jets 37 may be similarly aimed radially inwardly or outwardly.

In accordance with further alternative embodiments and, with reference to FIGS. 4, 6, 7 and 10, the fuel injector 30 may be provided as the quat fuel injector 18 (see FIG. 4) or the fuel nozzle injector 22 (see FIG. 6). In the former case, the flow 32 is provided as the flow of compressed air proceeding through the annulus 17 toward the head end 9 of the combustor 3. In the latter case, the flow 32 is provided as the flow of compressed air proceeding through the annular pathway 21 toward the combustion zone defined in the interior 8 of the combustor 3. In either case, the surface 31 forms a tubular element 70 having a longitudinal axis 71 and has lateral sides that face in the circumferential direction relative to an axial dimension of the combustor 3. The tubular element 70 is disposable in the annulus 17 or the annular pre-mixing pathway 21 with the longitudinal axis 71 arranged substantially perpendicularly with respect to the axial dimension of the combustor 3. The injection holes 36 and the delta wing features 33 may be correspondingly arranged along the longitudinal length of the surface 31 to face circumferentially whereby the jets 37 may be similarly aimed circumferentially.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A fuel injector, comprising:
   a surface formed as a tubular element and disposed proximate to a flow of a first fluid,
   the surface having upstream and downstream portions defined relative to the flow and defining injector holes in the downstream portion by which jets of a second fluid are injectable into the flow; and
   delta wing features disposed on the surface at the upstream portion, each one of the delta wing features being associated with a corresponding one of the injector holes and being configured to lift an oncoming portion of the flow off the surface and to cause the oncoming portion of the flow to form a pair of counter-rotating vortices that respectively co-rotate with the corresponding one of the jets in a cross-flow direction.
2. The fuel injector according to clause 1, wherein the surface faces inwardly and the injector holes, the jets and the delta wing features are arranged annularly.
3. The fuel injector according to clause 1 or 2, wherein the surface faces outwardly and the injector holes, the jets and the delta wing features are arranged laterally.

## Claims

1. A fuel injector (30), comprising:
a surface (31) disposed proximate to a flow (32) of a first fluid,
the surface having upstream (34) and downstream (35) portions defined relative to the flow (32) and defining an injector hole (36) in the downstream portion (35) by which a jet (37) of a second fluid is injectable into the flow (32); and
a delta wing feature (33) disposed on the surface (31) at the upstream portion (34), the delta wing feature (33) being configured to lift an oncoming portion (40) of the flow (32) off the surface (31) and to cause the oncoming portion (40) of the flow (32) to form a pair of counter-rotating vortices (43) that respectively co-rotate with the jet (37) in a cross-flow direction.

2. The fuel injector according to claim 1, wherein the delta wing feature (33) comprises a curved leading edge (41).

3. The fuel injector according to claim 1 or 2, wherein the delta wing feature (33) comprises a substantially flat, ramped surface (42).

4. The fuel injector according to any of claims 1 to 3, wherein the delta wing feature (33) comprises converging lateral surfaces (44).

5. The fuel injector according to any of claims 1 to 4, wherein the delta wing feature (33) comprises a substantially linear trailing edge (45).

6. The fuel injector according to any of claims 1 to 5, wherein leading (43) and trailing (45) edges of the delta wing feature (33) are transversely oriented.

7. The fuel injector according to any preceding claim, wherein an alignment of the injector hole (36) and the delta wing feature (33) is substantially parallel with a predominant direction of the flow (32).

8. The fuel injector according to any preceding claim, wherein the injector hole (36) and the delta wing feature (33) are each plural in number, each one of the plural delta wing features (33) being associated with a corresponding one of the plural injector holes (36).

9. The fuel injector according to any preceding claim, wherein the flow (32) is directed toward a main flow of products of combustion proceeding from a combustor (3), through a transition zone and toward a turbine (4).

10. The fuel injector according to claim 9, wherein the surface forms a tubular element (50) having a longitudinal axis, the tubular element (50) being disposable with the longitudinal axis (51) arranged along a radial orientation relative to the main flow of the products of combustion.

11. The fuel injector according to any preceding claim, wherein the flow (32) is directed toward one of a head end (9) of a combustor (3) or a combustion zone of a combustor (3).

12. The fuel injector according to claim 11, wherein the surface forms a toroidal element (60) having a poloidal axis (61), the toroidal element (60) being disposable with the poloidal axis (61) arranged along an axial dimension of the combustor (3).

13. The fuel injector according to claim 11, wherein the surface forms a tubular element (70) having a longitudinal axis (71), the tubular element (70) being disposable with the longitudinal axis (71) arranged along a radial dimension of the combustor (3).
